# EUROPEAN PATENT APPLICATION

(11) **EP 4 086 687 A1**
(43) Date of publication of application: **09.11.2022**
(21) Application number: 21172631.0
(22) Date of filing: 07.05.2021
(51) Int. Cl.: G02B 21/36, G02B 21/00

(54) **AN OPTICAL CARRIER FOR AN AT LEAST PARTLY DIGITAL MICROSCOPE, A CONNECTABLE VIEWER MODULE FOR VIEWING AN IMAGE OF AN OBJECT, A SURGICAL MICROSCOPE AND A SYSTEM**

(71) Applicant: Leica Instruments (Singapore) Pte. Ltd., Singapore 608924 (SG)
(72) Inventor: PAULUS, Robert, 88145 Hergatz (DE); MARTE, Christian, 6850 Dornbirn (AT)
(74) Representative: 2SPL Patentanwälte PartG mbB

(57) **Abstract**

An embodiment of an optical carrier 100 for an at least partly digital microscope comprises an optical system 102 and at least one image sensor 104. The optical system 102 is configured to project an image of an object 106 to the image sensor 104. The image sensor 104 is configured to generate a signal 105 based on the image. The optical carrier 100 further comprises an electronical interface 108 configured to enable transmission of the signal 105 to a connectable viewer module 110.

## Description

### Technical field

Examples relate to optical carriers for at least partly digital microscopes, connectable viewer modules for viewing an image of an object, surgical microscopes and systems.

### Background

Microscopes can be used to view objects with higher magnification and/or generally with a different perspective. The configuration of microscopes can depend on the intended use in a specific application. For example, it may be desired to use the microscope such that the object can be viewed simultaneously by several users of the microscope.

For surgery, a main viewer module is usually provided by an optical carrier of the microscope to enable viewing e.g. tissue material for a main surgeon. For simultaneous observation of the object for more than one surgeon, accessory viewer modules can be attached to the optical carrier of the microscope. For example, a viewer module can be a side assistant or a back assistant module e.g. depending on its position relative to the main eyepiece of the optical carrier.

### Summary

There is a desire for improved optical carriers for (at least partly) digital microscopes and improved viewer modules for viewing an image of an object. Further, there is a demand for improved surgical microscopes and improved systems comprising surgical microscopes.

This desire is addressed by the subject matter of the independent claims.

Some embodiments relate to an optical carrier for an at least partly digital microscope. The optical carrier comprises an optical system and at least one image sensor. The optical system is configured to project an image of an object to the image sensor. The image sensor is configured to generate a signal based on the image. The optical carrier further comprises an electronical interface configured to enable transmission of the signal to a connectable viewer module. The optical carrier can be used in combination with one or more connectable viewer modules such that the image of the object can be viewable by means of the connectable viewer modules. The electrical interface can enable transmission of image information of the object from the optical carrier to the viewer module. Due to the electronical interface, the optical carrier might not need to provide additional space for displays or optical elements for each connectable viewer module. The optical carrier can be more compact since displays or additional optical elements might not be necessary. Further, connectable viewer modules may be implementable with smaller dimensions or are feasible more flexibly since opto-mechanical interfaces for connecting the viewer module to the optical carrier might not be required.

According to some embodiments, the optical carrier further comprises a mounting interface configured to provide a connection for mounting the connectable viewer module to the optical carrier. The mounting interface may enable a mechanical connection of the connectable viewer module to the optical carrier. The mounting interface of the optical carrier may be less complex and smaller compared to an opto-mechanical interface of a conventional optical carrier.

According to some embodiments, the electronical interface is configured to enable transmission of the signal to a structure comprising a mechanical interface for mounting the connectable viewer module to the structure. The electronical interface may enable transmission of the image information from the optical carrier to the structure comprising the mechanical interface. A connectable viewer module may be attachable to the mechanical interface of the structure. The viewer module may be useable without connecting the viewer module directly mechanically to the optical carrier. For example, using the viewer module at the structure may be easier or more convenient for a user to view the image of the object.

According to some embodiments, the optical carrier further comprises a cable structure configured to transport the signal from a transmitter of the optical carrier to the connectable viewer module or to a structure comprising a mechanical interface for mounting the connectable viewer module to the structure. The optical carrier may comprise a transmitter generating the signal to be transmitted to the connectable viewer module or to the structure comprising the mechanical interface. In contrast to wireless signal transmission, the signal could be transmitted via the cable structure faster, over greater distances, with less distortion or better quality.

According to some embodiments, the optical carrier further comprises a transmitter configured to transmit the signal wirelessly to the connectable viewer module or to a structure comprising a mechanical interface for mounting the connectable viewer module to the structure. The optical carrier may comprise a transmitter generating the signal to be transmitted to the connectable viewer module or to the structure comprising the mechanical interface. With wireless signal transmission a cable structure might not be necessary. Further, the connectable viewer module may be useable more flexibly independently from availability of a cable structure close to the connectable viewer module.

According to some embodiments, the connectable viewer module is an accessory part of the optical carrier to enable viewing the image of the object if the connectable viewer module is connected to the optical carrier at least electronically. The connectable viewer module may be an optional component of the optical carrier for viewing the image of the object. The image of the object may be viewable by the viewer module if the viewer module is electronically connected to the optical carrier such that the signal from the optical carrier can be received.

According to some embodiments, the connectable viewer module comprises a display configured to use the signal to display the image of the object. The display of the viewer module may generate a digital image of the object based on the signal received from the optical carrier. Due to the display of the viewer module and the digital image, the connectable viewer module might not need an opto-mechanical interface to enable viewing the image of the object. The connectable viewer module can be implemented with smaller dimensions compared to a conventional connectable viewer module.

According to some embodiments, the connectable viewer module comprises an optical arrangement located in front of the display such that the displayed image is viewable by a user of the connectable viewer module. The optical arrangement can project the digital image such that the user of the viewer module can view the digital image. If the viewer module is used, the optical arrangement may be arranged between the display and the eye of the user. The optical arrangement may enable to obtain a good optical performance with respect to magnification and aberrations.

Some embodiments relate to a connectable viewer module for viewing an image of an object. The connectable viewer module comprises an electronical interface configured to enable reception of a signal from the optical carrier according to one of the concepts described above. The connectable viewer module further comprises a display configured to use the signal to display the image of the object. The viewer module can be electronically (and optionally mechanically) connected to the optical carrier for an at least partly digital microscope. The connectable viewer module can receive the signal of the optical carrier to obtain image information of the object. The signal can be used to generate a digital image of the object by means of the display. The connectable viewer module may enable viewing the image of the object without mechanically connecting the viewer module to the optical carrier. The viewer module might not need an opto-mechanical interface to enable viewing the image of the object. Compared to a conventional connectable viewer module, the viewer module according to the proposed concept may be implementable with smaller dimensions.

According to some embodiments, the connectable viewer module further comprises an optical arrangement located in front of the display such that the displayed image is viewable by a user of the connectable viewer module. The optical arrangement can project the digital image such that the user of the viewer module can view the digital image. If the viewer module is used, the optical arrangement may be arranged between the display and the eye of the user. The optical arrangement may enable to obtain a good optical performance with respect to magnification and aberrations.

According to some embodiments, the connectable viewer module further comprises a mounting interface configured to enable a mounting of the connectable viewer module to the optical carrier or to a structure electronically coupled with the optical carrier. The mounting interface may enable a mechanical connection of the connectable viewer module to the optical carrier or to the structure electronically coupled with the optical carrier. The mounting interface of the connectable viewer module may be less complex and smaller compared to an opto-mechanical interface of a conventional connectable viewer module.

According to some embodiments, the connectable viewer module further comprises a receiver configured to receive the signal from the optical carrier wirelessly. By receiving the signal generated by the optical carrier, image information of the viewed object can be obtained and used to generate the digital image on the display. With a wireless receiver, the connectable viewer module may be useable more flexibly independently from availability of a cable structure close to the connectable viewer module.

According to some embodiments, the connectable viewer module further comprises a sensor configured to sense a position or an orientation of the connectable viewer module. The connectable viewer module further comprises a circuitry configured to adapt the signal based on the position or orientation of the connectable viewer module according to a perspective of a user of the connectable viewer module. The sensor of the viewer module may provide positional information of the connectable viewer module. Positional information can be used to adapt the signal for generating the digital image according to the perspective of the user of the connectable viewer module. For example, a user of the connectable viewer module may view (in accordance with its perspective) a rotated digital image compared to the original image information provided by the optical carrier.

According to some embodiments, the connectable viewer module further comprises a further display configured to use a further signal from the optical carrier to display a further image of the object such that the connectable viewer module enables stereoscopic vision of the object. The user may obtain a three-dimensional impression of the object or a part of the object when viewing the (first) image with the first eye and the further image with the second eye simultaneously.

An embodiment relates to a surgical microscope comprising the optical carrier according to one of the concepts described above. The optical carrier may be part of the surgical microscope. With the optical carrier, several surgeons may have the opportunity to view the object simultaneously. If a surgeon desires to view the object by means of the connectable viewer module, the connectable viewer module can be electronically (and optionally mechanically) connected to the optical carrier.

According to an embodiment, the surgical microscope further comprises a stand comprising an arm carrying the optical carrier, wherein the structure is part of the arm. To use the connectable viewer module for viewing the image of the object, the connectable viewer module can be mounted to the part of the arm. The part of the arm of the stand may provide a structure for connecting the connectable viewer module close to the optical carrier.

An embodiment relates to a system comprising the surgical microscope according to one of the concepts described above. Further, the system comprises an operating table, wherein the structure is part of the operating table. To use the connectable viewer module for viewing the image of the object, the connectable viewer module can be mounted to the part of the operating table. The part of the operating table may provide a structure for connecting the connectable viewer module near to the optical carrier or near to the patient to be treated on the operating table.

### Short description of the Figures

Some examples of apparatuses and/or methods will be described in the following by way of example only, and with reference to the accompanying figures, in which
Fig. 1 illustrates an embodiment of an optical carrier for an at least partly digital microscope;
Fig. 2 illustrates another embodiment of an optical carrier for a (at least partly) digital microscope;
Fig. 3 illustrates an embodiment of a connectable viewer module for viewing an image of an object;
Fig. 4 illustrates another embodiment of a connectable viewer module for viewing an image of an object;
Fig. 5 illustrates an embodiment of a surgical microscope; and
Fig. 6 illustrates an embodiment of a system.

### Detailed Description

Various examples will now be described more fully with reference to the accompanying drawings in which some examples are illustrated. In the figures, the thicknesses of lines, layers and/or regions may be exaggerated for clarity. Features illustrated with dashed lines in the figures may indicate optional aspects of the proposed concept.

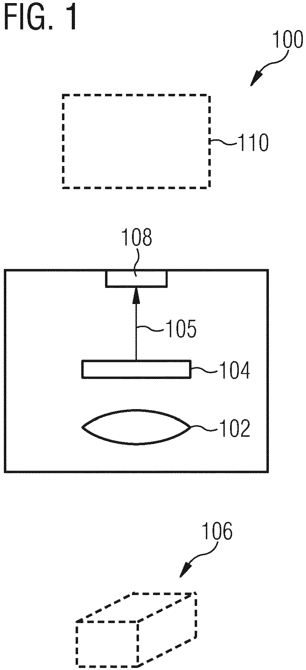

Fig. 1 shows an optical carrier 100 for an at least partly digital microscope. The optical carrier 100 comprises an optical system 102 and at least one image sensor 104. The optical system 102 is configured to project an image of an object 106 to the image sensor 104. The image sensor 104 is configured to generate a signal 105 based on the image. The optical carrier 100 further comprises an electronical interface 108 configured to enable transmission of the signal 105 to a connectable viewer module 110. The (at least partly) digital microscope of the optical carrier 100 can provide digital image information of the object 106 to be viewed. The optical system 102 may comprise optical elements such as lenses or mirrors to project an image of the object 106 onto the surface of the image sensor 104. The image sensor 104 can generate the signal 105 based on the detected (e.g. light) beams from the object 106. The signal 105 can provide image information which can be transmitted to a connectable viewer module 110 via the electronical interface 108. The optical carrier 100 can enable viewing the image of the object 106 by means of one or more viewer modules 110 electronically coupled with the optical carrier 100. For viewing the image of the object 106 by means of the viewer modules 110, the optical carrier 100 might not need to provide space for (additional) displays. In contrast to conventional optical carriers for digital microscopes, the optical carrier 100 according to the proposed concept may have a smaller size. For example, displays or other optical elements for viewing the image of the object 106 can be part of the connectable viewer module 110. Due to the implementation of the optical carrier 100, the connectable viewer module 110 might not need a (complex or space consuming) opto-mechanical interface.

The electronical interface 108 of the optical carrier 100 may be any interface enabling a transmission of a signal 105 comprising image information. For example, the electronical interface 108 may be a high-definition multimedia interface (HDMI), a video graphics array (VGA) connector, a digital video interface (DVI), a display port (DP), Universal Serial Bus (USB) connector types or a wireless interface. The electronical interface 108 may be coupled with the image sensor 104 to receive the signal 105. Further, the electronical interface 108 may be coupled with e.g. a cable structure (wired signal transmission) or a surrounding of the optical carrier (wireless signal transmission). The electronical interface 108 may be close to or integrated in a mounting interface configured to provide a connection for mounting the connectable viewer module 110 to the optical carrier 100.

In some examples, the electronical interface 108 is configured to enable transmission of the signal to a structure comprising a mechanical interface for mounting the connectable viewer module 110 to the structure. With the structure a direct mechanical connection of the connectable viewer module 110 to the optical carrier 100 can be avoided since a connection to the structure can enable a usage of the connectable viewer module 110 to view the image of the object 106. Further, the structure may provide means for mounting or carrying the connectable viewer module 110. Examples for the structures may be a part of a stand or an arm carrying the optical carrier 100 or a table carrying the object 106. The structure can be any object suitable for mounting the connectable viewer module 110. The mechanical interface of the structure may comprise e.g. an electromechanical or mechanical locking system to provide a stable and safe connection to the connectable viewer module 110. The structure may comprise an electronical interface to enable signal reception from the optical carrier 100 and signal transmission to the connectable viewer module 110.

The optical carrier may provide a housing for the (at least partly) digital microscope or a means for accommodating components thereof such as the image sensor and the optical system. The optical carrier may protect the (at least partly) digital microscope from a surrounding or may carry the (at least partly) digital microscope above the object to be viewed. The optical carrier may provide place for the electronic interface (and optionally for further interfaces, e.g. mounting interfaces). Compared to conventional optical carriers for (at least partly) digital microscopes, the optical carrier 100 according to the proposed concept may have a smaller size or may be feasible with higher flexibility since the optical carrier 100 might not need displays, display electronics and/or infinity optics for proper beam projection to an opto-mechanical interface of the connectable viewer module. The optical carrier 100 may enable to use connectable viewer modules which might not comprise opto-mechanical interfaces (or even not a mechanical interface according to some embodiments).

The at least partly digital microscope may be a pure digital microscope or a hybrid like microscope where a main surgeon might have the opportunity to switch between pure optical (classical) view or a pure digital view while assistants may have the opportunity for a pure digital image view. In the following, concepts of the optical carrier or the connectable viewer module may be described in conjunction with a digital microscope. It is to be understood that these digital microscopes may be pure digital or partly digital (hybrid) microscopes.

The optical system of the optical carrier 100 may comprise optical elements such as an objective, lenses, mirrors, beam splitter, apertures or filters. The optical system may enable a proper projection of (e.g. visible light, infrared, ultraviolet) beams from the object to the surface of the image sensor 104. The optical system 102 may enable to generate a real (intermediate) image on the surface of the image sensor 104. The optical system 100 may enable viewing a magnified image of the object 106.

The image sensor 104 may detect the beams projected by the optical system 102 to the surface of the image sensor 104. The image sensor 104 can generate the signal 105 based on the image projected on the surface of the image sensor 104. The signal 105 may comprise digital data which can be used to display a digital image of the object 106. For example, the image sensor 104 may be a charge-coupled device (CCD) sensor or an active-pixel sensor (APS). The image sensor 104 may have a size in the range of millimeters with several pixels (e.g. several hundred to many thousands of pixels) in the range of a few micrometers.

The object 106 may be a human body, a part of a human body (e.g. the head or chest), biological material or a microelectronic device (e.g. a semiconductor chip). The user may be a surgeon or any other person in need of a magnified image of an object 106.

The connectable viewer module may be an accessory part of the optical carrier 100 to enable viewing the image of the object 106 if the connectable viewer module 110 is connected to the optical carrier at least electronically. Due to the electronic connection (e.g. wired or wireless connection), the connectable viewer module 110 may receive the signal 105 from the optical carrier 100. The connectable viewer module 110 may comprise an electronical interface to enable reception of the signal 105 from the optical carrier. Optionally, the connectable viewer module 110 may comprise a mounting interface for mounting the connectable viewer module 110 to the optical carrier 100 or a structure. The connectable viewer module 110 may comprise a display using the signal 105 to display the image of the object 106. For example, the display may be an LCD display (Liquid Crystal Display), a TFT display (Thin-film transistor-Display) or an OLED display (organic light-emitting diode display). For example, the connectable viewer module may be a side assistant module, a back assistant module and/or a main viewer module (for the main surgeon) electronically (and optionally mechanically) connectable to the optical carrier. The connectable viewer module 110 may comprise an optical arrangement (e.g. eyepieces or further optical elements) to enable viewing the digital image of the object 106. For example, the optical arrangement is located in front of the display such that the displayed image is viewable by a user of the connectable viewer module 110.

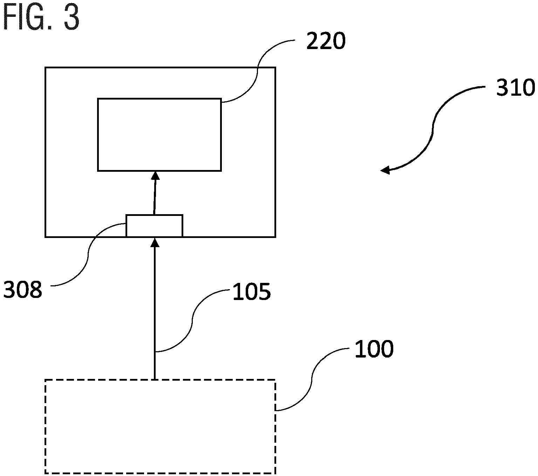

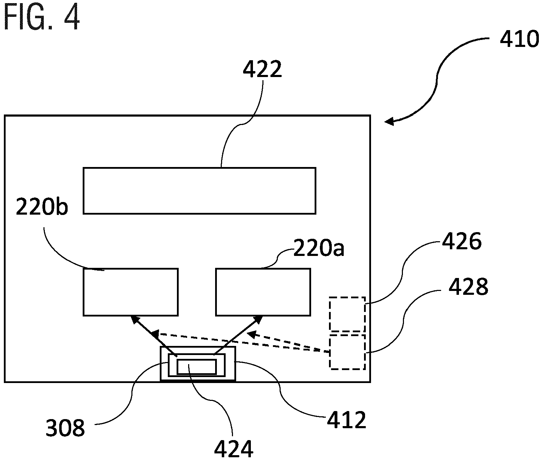

According to another example, the connectable viewer module may be a monitor electronically connected to the optical carrier 100 to display a digital image of the object 106. Further details for the connectable viewer module 110 are described in conjunction with the Figs. 3 and 4.

Although not explicitly illustrated in Fig. 1, the optical carrier 100 may comprise additional or optional components. For example, the optical carrier 100 may comprise a mounting interface, a cable structure or a transmitter to transmit the signal 105.

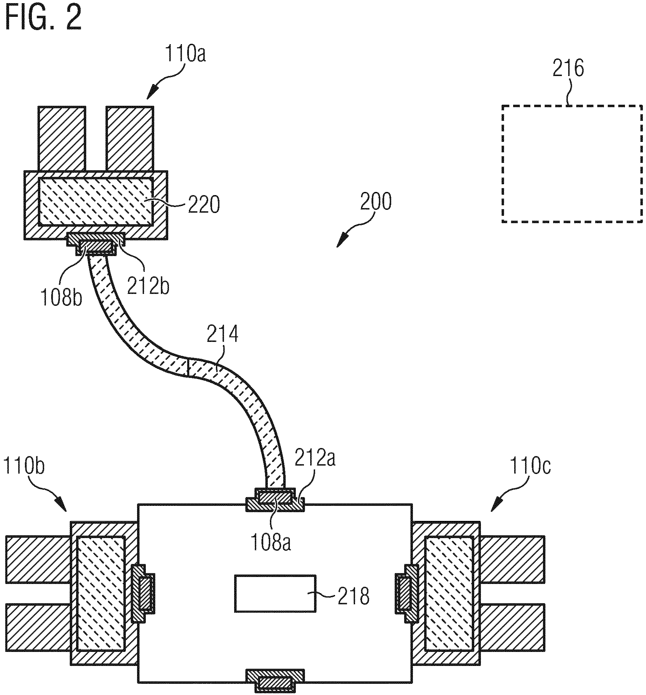

More details and aspects are mentioned in connection with the examples described above or below. The example shown in Fig. 1 may comprise one or more optional additional features corresponding to one or more aspects mentioned in connection with the proposed concept or one or more examples described above or below (e.g. Figs. 2-6).

Fig. 2 shows another embodiment of an optical carrier 200 for a (at least partly) digital microscope. The optical carrier 200 may be implemented similar to the implementation described in connection with Fig. 1. According to the example in Fig. 2, the optical carrier 200 is connected to three connectable viewer modules 100a-c. The connectable viewer modules 100a-c can be implemented similar to the implementation described in connection with Fig. 1 or the Figs. 3-4 in the following description. According to Fig. 2, the connectable viewer module 110a-c comprises a display 220 configured to use the signal 105 generated by the optical carrier 200 to display the image of the object. The connectable viewer module 110a-c comprises an electronical interface 108b and a mounting interface 212b which is further described in connection with the Figs. 2 and 3.

The optical carrier 200 comprises a mounting interface 212a configured to provide a connection for mounting the connectable viewer module 110a-c to the optical carrier 200. The mounting interface 212a may be any suitable interface e.g. for attaching, docking, locking or carrying the connectable viewer module 110a-c. The mounting interface 212a may be an electromechanical or mechanical mounting system to provide a stable and safe connection for the connectable viewer module 110a-c to the optical carrier 200. The optical carrier 200 may comprise one or more mounting interfaces 212a to enable mechanical connection to one or more connectable viewer modules 1 10a-c. The mounting interface 212a can be arranged on a surface or a housing of the optical carrier 200. The electronical interface 108a may be integrated in the mounting interface 212a or may be arranged close to or next to the mounting interface 212a. A mechanical connection of the connectable viewer module 110a-c to the optical carrier 200 may automatically lead to an electronic connection between the optical carrier 200 and the connectable viewer module 110a-c. With the mounting interface 212a the connectable viewer module 110a-c may be attachable to and detachable from the optical carrier 200.

According to another embodiment, the optical carrier 200 might not have a mounting interface 212a e.g. if it is not desired to mount the connectable viewer module 110a-c to the optical carrier 200.

Connectable viewer modules 110a-c may be directly mechanically connectable (or attachable or mountable) to the optical carrier 200. As exemplarily shown in Fig. 2, the connectable viewer modules 110b-c are directly mechanically connected to the optical carrier 200. The connection between the connectable viewer module 110a and the optical carrier 200 may be only electronically for signal transmission.

As illustrated exemplarily, the optical carrier 200 comprises a cable structure 214 configured to transport the signal from a transmitter 218 of the optical carrier 200 to the connectable viewer module 110a. Alternatively or optionally, the cable structure 214 may be configured to transport the signal from the transmitter 218 of the optical carrier 200 to a structure 216 comprising a mechanical interface for mounting the connectable viewer module 110a to the structure 216. The structure 216 may enable further signal transmission from the optical carrier 200 to the connectable viewer module 110a. The cable structure 214 can provide a wired electronical connection between the connectable viewer module 110a and the optical carrier 200. The cable structure 214 can be implemented according to the types of electronical interfaces of the optical carrier 200 and the connectable viewer module 110a. The cable structure 214 can provide a fast signal transmission, a signal transmission with reduced noise or with higher quality or over greater distances between the optical carrier and the connectable viewer module. The cable structure 214 may provide flexible mechanic for stability and cable guidance.

According to another example, the optical carrier 200 may comprise a transmitter configured to transmit the signal wirelessly to the connectable viewer module 110a-c or to a structure 216 comprising a mechanical interface for mounting the connectable viewer module 110a-c to the structure 216. The wireless transmitter can be implemented alternatively or additionally to the cable structure 214 of the optical carrier 200. The wireless transmitter may assist to avoid a direct contact between the optical carrier 200 and the connectable viewer module 1 10a-c. Via wireless signal transmission, the connectable viewer module 1 10a-c may be useable more flexibly (e.g. flexible arrangement) irrespective of an exact position or orientation of the optical carrier 200 or the electronical interface 108a of the optical carrier 200.

It is to be understand that the optical carrier may be useable without or in combination with one or more connectable viewer modules. For example, the optical carrier may comprise a main viewer (or main eyepieces) e.g. rigidly connected to the optical carrier to enable viewing the image of the object for a main user (e.g. main surgeon). The optical carrier may be useable in combination with the connectable viewer module to enable e.g. additional viewing the image of the object for further users (e.g. surgical assistants).

More details and aspects are mentioned in connection with the examples described above or below. The example shown in Fig. 2 may comprise one or more optional additional features corresponding to one or more aspects mentioned in connection with the proposed concept or one or more examples described above or below (e.g. Figs. 3-6).

In the following, the connectable viewer module is described in more detail. The connectable viewer module can be used in conjunction with optical carriers described in connection with the Fig. 1 or 2.

Fig. 3 shows a connectable viewer module 310 for viewing an image of an object. The connectable viewer module 310 comprises an electronical interface 308 configured to enable reception of a signal 105 from the optical carrier (e.g. optical carrier 100 or 200) described in connection with the Figs. 1 or 2. The connectable viewer module 310 further comprises a display 220 configured to use the signal 105 to display the image of the object. The connectable viewer module 310 may be implemented similar to the implementation described in connection with Fig. 1 or 2.

The connectable viewer module 310 may receive the signal 105 and use the image information of the signal 105 to display a digital image of the object. For example, the display 220 of the connectable viewer module 310 is a microdisplay. The connectable viewer module 310 may be an accessory component of the optical carrier such as a side assistant or back assistant module attachable to the optical carrier. According to another example, the display of the connectable viewer module may be of larger size (e.g. in the range of centimeters or meters). The connectable viewer module 310 may be a monitor displaying the digital image which can be viewed by several viewers (e.g. surgeons) simultaneously. For example, the display 220 may be an LCD display (Liquid Crystal Display), a TFT display (Thin-film transistor-Display) or an OLED display (organic light-emitting diode display).

The integration of the display 220 in the connectable viewer module 220 may enable an exclusion of one or more displays in the optical carrier. This concept may enable a reduction of the size of the optical carrier. Conventional optical carrier may have a larger size since they comprise displays irrespective of whether or not a connectable viewer module is used in combination with the optical carrier.

Compared to conventional connectable viewer modules, the connectable viewer module 310 of Fig. 1 may be implementable more flexibly and with smaller dimensions. Since a display and a digital image is used, the connectable viewer module 310 might not need an opto-mechanical interface. For example, the connectable viewer module 310 might not need further optical elements such as lenses or mirrors to project an intermediate image from the optical carrier to the connectable viewer module to enable viewing the image of the object.

The electronic interface 308 of the connectable viewer module 310 may be implemented similar or different to the implementation of the electronic interface of the optical carrier for a digital microscope. The electronic interface 308 may be an arbitrary interface suitable for enabling a reception of the signal 105 via a wired or wireless connection between the optical carrier and the connectable viewer module 310.

More details and aspects are mentioned in connection with the examples described above or below. The example shown in Fig. 3 may comprise one or more optional additional features corresponding to one or more aspects mentioned in connection with the proposed concept or one or more examples described above or below (e.g. Figs. 4-6).

Fig. 4 shows another embodiment of a connectable viewer module 410. The connectable viewer module 410 may be implemented similar to the implementation described in connection with Figs. 1 to 3. The connectable viewer module 410 comprises a display 220a which can be considered as a first display. The connectable viewer module 410 further comprises a further display 220b configured to use a further signal from the optical carrier to display a further image of the object such that the connectable viewer module 410 enables stereoscopic vision of the object. The connectable viewer module 410 may be connectable to an optical carrier with a digital stereo microscope (e.g. with two image sensors or an image sensor with distinct sensing areas). The stereo microscope may generate a first signal and a further signal which can be transmitted to the connectable viewer module 410 and used to generate the (first) image and the further image. The user may obtain a three-dimensional impression of the object or a part of the object when viewing the (first) image with the first eye and the further image with the second eye simultaneously. Alternatively, the connectable viewer module may receive a single signal from an optical carrier with a digital microscope to visualize the object in 2D (e.g. the signal from the (sole) image sensor may be duplicated and this unique image may be injected in both displays or in only one channel, if only one display is implemented).

The connectable viewer module 410 further comprises an optical arrangement 422 located in front of the display(s) 220a, 220b such that the displayed image is viewable by a user of the connectable viewer module 410. The optical arrangement 422 may comprise one or more optical elements (e.g. lenses, beam splitter, mirrors, filters etc.). The optical arrangement 422 may comprise a first portion for the first display and a second portion for the further (or second) display. The second portion of the optical arrangement may be implemented similar or equal to the first portion of the optical arrangement with respect to the number and type of lenses. Alternatively, the displays 220a-b may use the same optical arrangement. If the user uses the connectable viewer module 410, the optical arrangement may be located between the eye(s) of the user and the displaying surface of the display of the connectable viewer module 410. The optical arrangement 422 may provide means such that a user of the connectable viewer module may be able to view the displayed image. For example, the optical arrangement 422 provides the functionality of adjusting the two portions to the users interpupillary distance. Additionally, the optical arrangement 422 may provide the opportunity to adjust a diopter of the connectable viewer module 410 according to the individual eye of the user.

As exemplarily illustrated in Fig. 4, the connectable viewer module 410 further comprises a mounting interface 412 configured to enable a mounting of the connectable viewer module 410 to the optical carrier or to a structure electronically coupled with the optical carrier. The mounting interface 412 may be implemented similar to the implementation of the mounting interface described in connection with the optical carrier (e.g. in Fig. 1 or 2). The mounting interface 412 of the connectable viewer module may be a counterpart of the mounting interface of the optical carrier. For example, the mounting interface 412 of the connectable viewer module can be mechanically connected (e.g. attached, screwed, locked, latched) to the mounting interface of the optical carrier. Similarly, the mounting interface 412 of the connectable viewer module 410 may be mechanically connectable via the mechanical interface to a structure electronically coupled with the optical carrier. The structure may be any object (e.g. part of the optical carrier or arm or stand carrying the optical carrier, table carrying the object) electronically connected to the optical carrier such that the signal can be received.

According to the example, the connectable viewer module 410 further comprises a receiver 424 configured to receive the signal from the optical carrier wirelessly. Alternatively or additionally, the connectable viewer module may comprise a cable structure e.g. to receive the signal from the optical carrier faster or with better quality. By using fast electrical components for the receiver and/or the display and/or additional image processing components, the connectable viewer module 410 may be able to display live or real-time images or video streams of the object.

Optionally, the connectable viewer module further comprises a sensor 426 configured to sense a position or an orientation of the connectable viewer module 410. Further, the connectable viewer module may further comprise a circuitry 428 configured to adapt the signal based on the position or orientation of the connectable viewer module 410 according to a perspective of a user of the connectable viewer module 410. For example, the sensor 426 may be a position, rotation or angle sensor configured to detect a distance, direction, orientation, position, angle of the connectable viewer module 410 (e.g. relative to the optical carrier or a common reference) based on e.g. a capacitive, inductive, magnetic or optical principle. Information on the position or orientation of the connectable viewer module may indicate the perspective of a user of the connectable viewer module 410. The information on the position or orientation of the connectable viewer module 410 may be used by the circuitry 428 to adapt the signal such that the digital image can be displayed appropriately according to the perspective of the user. For example, the orientation of the image on the display may be defined by the view of the main surgeon. For a back assistant module and a side assistant module, the image on the display can be orientated to the specific perspective of the user. This orientation can be realized in a digital way while the orientation of the viewer module may be detected e.g. with an encoder mounted in the individual viewer module.

More details and aspects are mentioned in connection with the examples described above or below. The example shown in Fig. 4 may comprise one or more optional additional features corresponding to one or more aspects mentioned in connection with the proposed concept or one or more examples described above or below.

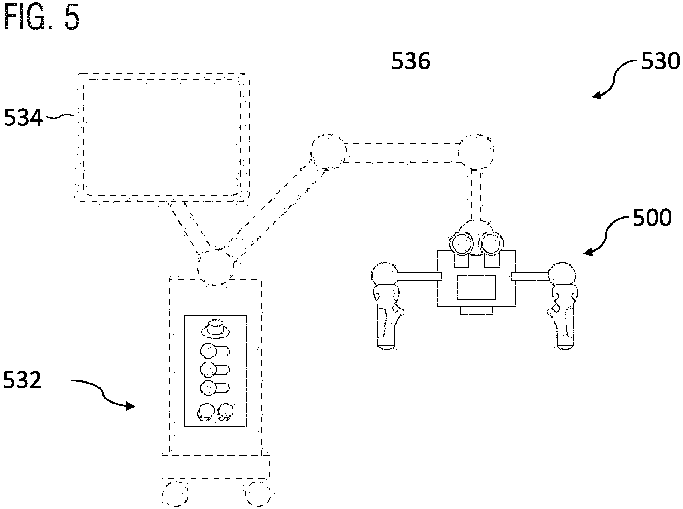

Fig. 5 shows an embodiment of a surgical microscope 530 comprising an optical carrier 500 according to a concept described above. The optical carrier 500 may be implemented as described in connection with one or more of the Figs. 1 or 2. The surgical microscope 530 in Fig. 5 comprises a support arrangement with a number of optional components, such as a base unit 532 with a (rolling) stand, one or more (auxiliary) displays 534, a (robotic or manual) (support) arm 536. The support arm 536 holds the optical carrier 500 in place and is coupled to the base unit 532. The surgical microscope 530 may further comprise a lighting system or other components of a microscope system.

According to an embodiment of the surgical microscope, a structure (as previously described in connection with the optical carrier and the connectable viewer module) may be part of the (support) arm 536 of the surgical microscope 530. That part of the (support) arm 536 indicating the structure, may be electronically coupled with the optical carrier 530. The connectable viewer module may be mountable to the part of the (support) arm 536 to enable viewing the image of the object. The part of the (support) arm 536 may be a suitable structure e.g. for integrating a cable structure which receives the signal from the optical carrier. For example, the cable structure can be hidden by the housing of the (support) arm 536. Further, a mechanical interface may be easily integrable to the part of the (support) arm 536 for mounting the connectable viewer module.

More details and aspects are mentioned in connection with the examples described above or below. The example shown in Fig. 5 may comprise one or more optional additional features corresponding to one or more aspects mentioned in connection with the proposed concept or one or more examples described above or below.

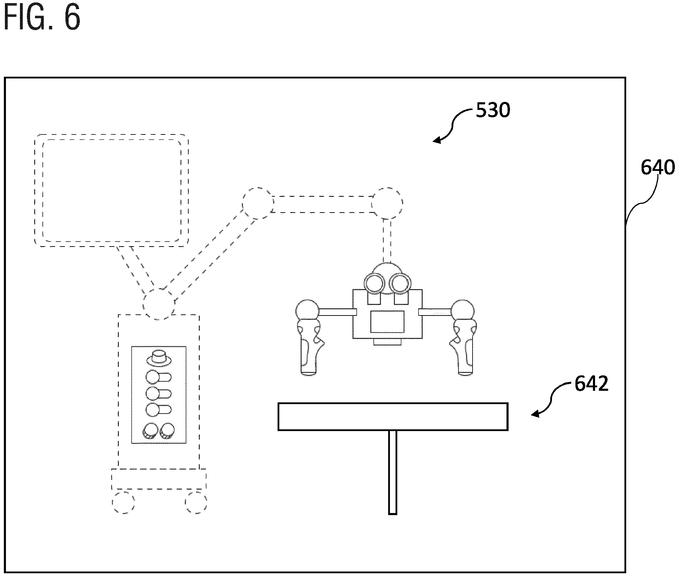

Fig. 6 shows a system 640 comprising a surgical microscope 530. The surgical microscope 530 may be implemented similar to the implementation described in connection with Fig. 5. The system 640 further comprises an operating table 642, wherein the structure is part of the operating table 642. For example, the part of the operating table may be a frame of the operating table. The part of the operating table may be a suitable structure for connecting the connectable viewer module close to the optical carrier or to the (part of the) object to be viewed. Further, a mechanical interface may be easily integrable to the part of the operating table for mounting the connectable viewer module.

A mounting of the connectable viewer module is not limited to the optical carrier or to a component of the surgical microscope. The connectable viewer module may be connectable to any structure electronically coupled to the optical carrier such that a digital image of the object can be viewed by means of the connectable viewer module.

Some embodiments relate to a modular viewer approach. The proposed concept for the optical carrier may enable to provide a compact optical carrier. For conventional optical carriers, an opto-mechanical interface may be standardized interface which enables mounting different types of viewer modules (e.g. optical tubes). For conventional optical carriers, the display and needed optics are usually located inside the optics carrier. The display and its optics may occupy space inside the optical carrier even if display and/or optics are not used for the specific configuration.

This aspect may be avoidable by the proposed concept for optical carrier and the connectable viewer module. The viewer is realized as a module which comprises the display (and optionally the optics) to provide the image to the eye of the user. Only an electronical interface may be needed for the optics carrier. The volume of the single viewer module can be realized smaller compared to a standard optical tube since consideration of opto-mechanical interface conventions might not be necessary. The basic optical carrier can be realized within a smaller volume which is enlarged only if needed by mounting the needed viewer modules. The overall volume of the final configured microscope system may be smaller which may have a positive impact in the daily use e.g. in the operation room where the space around the operation area and the view to other infrastructure might be already limited.

Further, the proposed concept may enable to position the viewer module with a flexible mounting structure at a more ergonomic position than the conventionally used mounting opportunities since opto-mechanical conventions might not be relevant. This may open the degree of flexibility to use for example a gooseneck-like mechanic.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference Signs

- 100: optical carrier
- 102: optical system
- 104: image sensor
- 105: signal
- 106: object
- 108: electronical interface
- 110(a-c): connectable viewer module
- 200: optical carrier
- 212a-b: mounting interface
- 214: cable structure
- 216: structure
- 218: transmitter
- 220(a-b): display
- 308: electronical interface
- 310: connectable viewer module
- 410: connectable viewer module
- 412: mounting interface
- 422: optical arrangement
- 424: receiver
- 426: sensor
- 428: circuitry
- 500: optical carrier
- 530: surgical microscope
- 532: base unit
- 534: (auxiliary) display
- 536: support arm
- 640: system
- 642: operating table

## Claims

1. An optical carrier (100, 200, 500) for an at least partly digital microscope, comprising:
an optical system (102) and at least one image sensor (104), the optical system (102) configured to project an image of an object (106) to the image sensor (104); the image sensor (104) configured to generate a signal (105) based on the image; and
an electronical interface (108, 108a) configured to enable transmission of the signal (105) to a connectable viewer module (110, 110a-c, 310, 410).

2. The optical carrier (200) according to claim 1, further comprising:
a mounting interface (212a) configured to provide a connection for mounting the connectable viewer module (110a) to the optical carrier (200).

3. The optical carrier (200) according to claim 1 or 2, wherein
the electronical interface (108a) is configured to enable transmission of the signal (105) to a structure (216) comprising a mechanical interface for mounting the connectable viewer module (110a) to the structure (216).

4. The optical carrier (200) according to one of the claims 1 to 3, further comprising:
a cable structure (214) configured to transport the signal (105) from a transmitter (218) of the optical carrier (200) to the connectable viewer module (110a-c) or to a structure (216) comprising a mechanical interface for mounting the connectable viewer module (110) to the structure (216).

5. The optical carrier (200) according to one of the claims 1 to 3, further comprising:
a transmitter (218) configured to transmit the signal (105) wirelessly to the connectable viewer module (110a-c) or to a structure (216) comprising a mechanical interface for mounting the connectable viewer module (110a-c) to the structure (216).

6. The optical carrier (100) according to one of the claims 1 to 5, wherein the connectable viewer module (110) is an accessory part of the optical carrier (100) to enable viewing the image of the object (106) if the connectable viewer module (110) is connected to the optical carrier (100) at least electronically.

7. The optical carrier (200) according to claim 6, wherein
the connectable viewer module (110a-c) comprises a display (220, 220a-b) configured to use the signal (105) to display the image of the object (106).

8. The optical carrier (100) according to claim 7, wherein
the connectable viewer module (410) comprises an optical arrangement (422) located in front of the display (220, 220a-b) such that the displayed image is viewable by a user of the connectable viewer module (410).

9. A connectable viewer module (110, 110a-c, 310, 410) for viewing an image of an object, comprising:
an electronical interface (108b, 308) configured to enable reception of a signal (105) from the optical carrier (100) according to one of the claims 1 to 8; and
a display (220, 220a) configured to use the signal (105) to display the image of the object (106).

10. The connectable viewer module (410) according to claim 9, further comprising:
an optical arrangement (422) located in front of the display (220, 220a) such that the displayed image is viewable by a user of the connectable viewer module (410).

11. The connectable viewer module (410) according to claim 9 or 10, further comprising:
a mounting interface (412) configured to enable a mounting of the connectable viewer module (410) to the optical carrier (100) or to a structure (216) electronically coupled with the optical carrier (100).

12. The connectable viewer module (410) according to one of the claims 9 to 11, further comprising:
a receiver (424) configured to receive the signal (105) from the optical carrier (100) wirelessly.

13. The connectable viewer module (410) according to one of the claims 9 to 12, further comprising:
a sensor (426) configured to sense a position or an orientation of the connectable viewer module (410); and
circuitry (428) configured to adapt the signal (105) based on the position or orientation of the connectable viewer module (410) according to a perspective of a user of the connectable viewer module (410).

14. The connectable viewer module (410) according to one of the claims 9 to 13, further comprising:
a further display (220b) configured to use a further signal from the optical carrier (100) to display a further image of the object (106) such that the connectable viewer module (410) enables stereoscopic vision of the object (106).

15. A surgical microscope (530), comprising:
the optical carrier (100) according to one of the claims 1 to 8.

16. The surgical microscope (530) according to claim 15, further comprising:
a stand (532) comprising an arm (536) carrying the optical carrier (500), wherein the structure (216) is part of the arm (536).

17. A system (640), comprising:
the surgical microscope (530) according to claim 15 or 16; and
an operating table (642), wherein the structure (216) is part of the operating table (642).
